# EUROPEAN PATENT SPECIFICATION

(11) **EP 0 812 711 B1**
(45) Date of publication and mention of the grant of the patent: **07.11.2001**
(21) Application number: 97109561.7
(22) Date of filing: 11.06.1997
(51) Int. Cl.: B60D 1/02

(54) **Automatic tow hitch for vehicles, in particular agricultural vehicles**
Automatische Anhängervorrichtung für Fahrzeuge, insbesondere für Landwirtschaftsfahrzeuge
Attelage automatique pour véhicules en particulier pour véhicules agricoles

(30) Priority: 13.06.1996 IT BO960327
(43) Date of publication of application: 17.12.1997
(73) Proprietor: CBM S.p.A., 41100 Modena (IT)
(72) Inventor: Cornia, Enrico Maria, 41100 Modena (IT)
(74) Representative: Provvisionato, Paolo

(56) References cited:
- EP-A- 0 146 116
- EP-A- 0 315 731
- DE-A- 1 580 028
- DE-A- 3 226 360
- DE-A- 4 310 263
- DE-A- 4 412 088
- DE-B- 1 095 132
- DE-U- 1 816 204
- US-A- 4 311 244

## Description

This invention concerns an automatic tow hitch for vehicles, in particular but not exclusively for agricultural vehicles.

Various types of automatic hitches similar to the type indicated above are known which, with more or less complex devices, make it possible to automatically block - by coupling it - the towing eye of a trailer on its insertion in the opening of the tow hitch. EP-A-0315731 and EP-A-0146 116 both disclose a tow hitch, according to the preamble of Claim 1, wherein a single blocking means is connected to a sensor organ to block the pin in the raised position regardless of the presence of the towing eye.

The object of this invention is to provide a tow hitch of the type indicated above which is simple and economical to manufacture and is practical to use even in difficult working conditions, also guaranteeing full compliance with the safety requirements which are also requested by the current regulations for this sector.

To achieve this object, the subject of this invention is an automatic tow hitch of the type indicated at the beginning of this description having the characteristics indicated in claim 1 hereunder.

Further characteristics and advantages of this invention will be indicated in the description which follows of a preferred embodiment, with reference to the attached drawings, provided merely as non-limiting examples, in which:
- figure 1 is a longitudinal cross-section along the line I-I in figure 2 of an automatic tow hitch realised according to this invention,
- figure 2 is a transverse cross-section along the line II-II in figure 1,
- figure 3 is a side view of an upper part of the automatic tow hitch in the direction of the arrow III in figure 2, and
- figure 4 is a cross-section along the line IV-IV in figure 1 of a detail of the blocking device of the automatic hitch, and
- figure 5 is a view from above in the direction of the arrow V in figure 3 of a control lever of the automatic hitch.

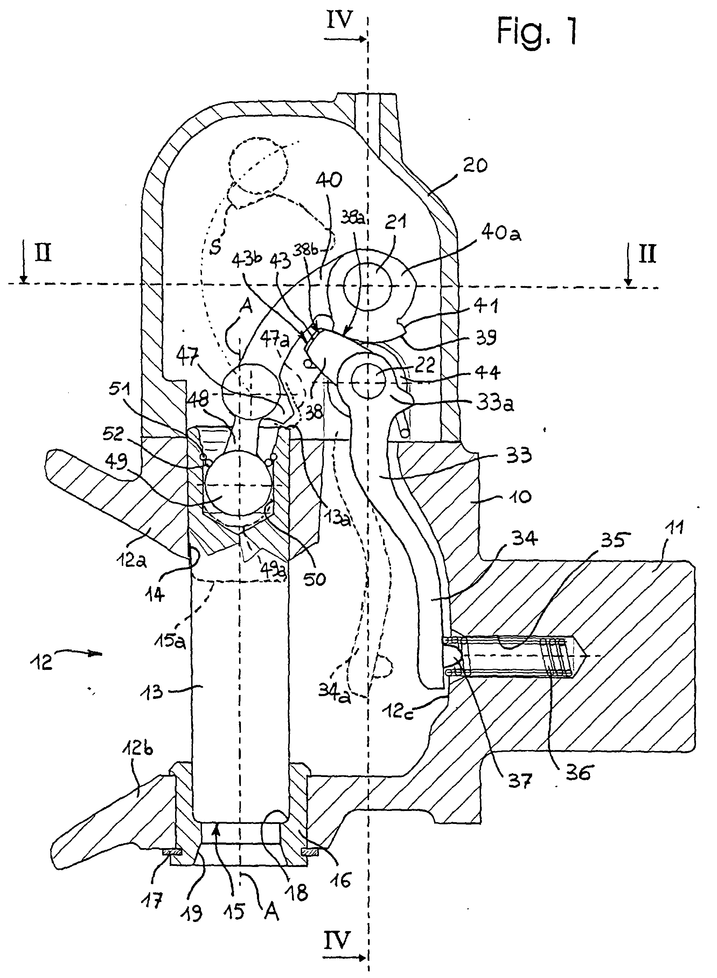

With reference to the figures, an automatic hitch for vehicles, in particular but not exclusively for agricultural vehicles, comprises a main body 10 which can be coupled in a generally known way to a tractor, for example by means of a shank 11. On the opposite side to the shank 11, a fork-shaped opening 12 consists of an upper lip 12a and a lower lip 12b to accept, when in use, the towing eye of the drawbar of a trailer (not illustrated) in which a pin 13 is inserted, mounted to slide axially through a hole 14 cut in the upper lip 12a in order to slide selectively along the axis A-A from a blocking position, illustrated in figure 1 by a continuous line, to a disengaged position in which the lower end 15 of the pin 13 reaches the position indicated by the dashed line 15a.

In the blocking position, the lower end 15 of the pin 13 rests against the inner edge 18 of a bushing 16 mounted on the lower lip 12b and held in place at its lower end by a retaining ring 17. The inner cavity of the bushing 16 defines a lower opening 19 for the discharge of traces of earth, dirt, etc.

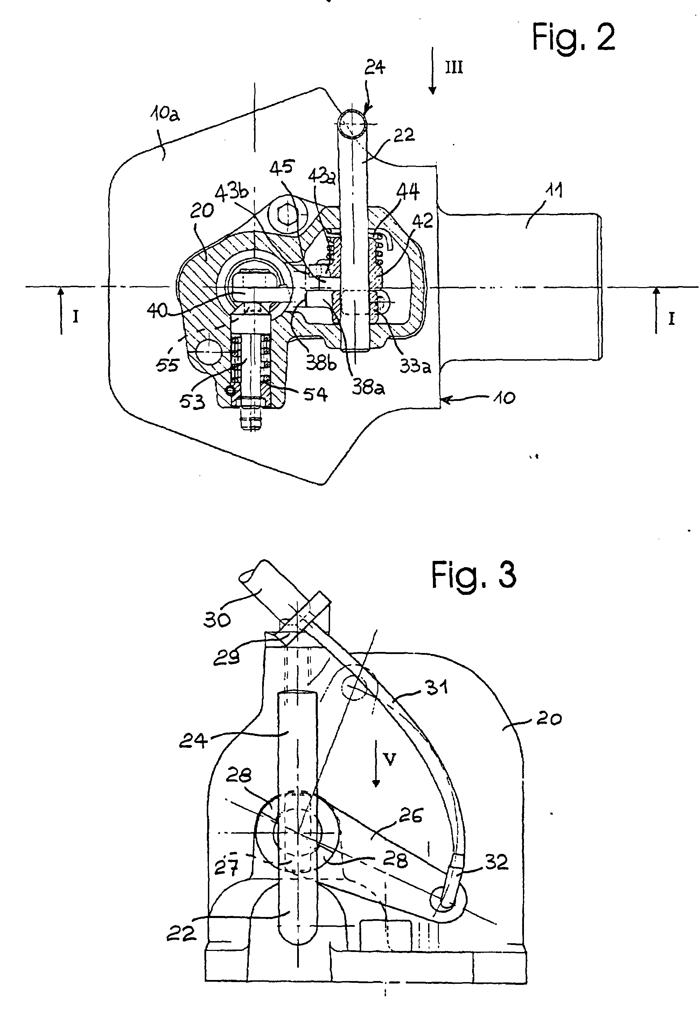

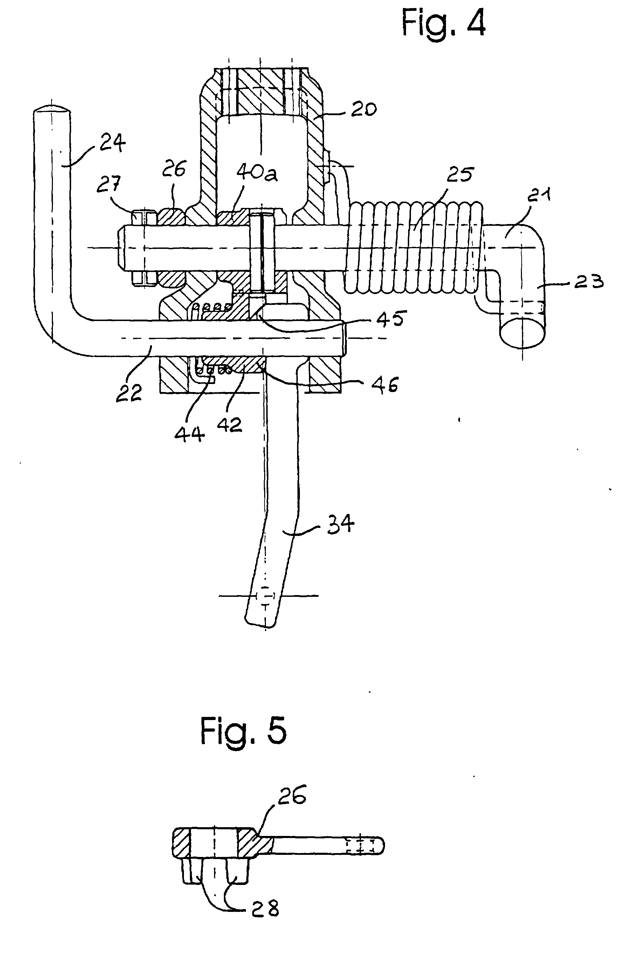

As can also be seen in figures 2 and 4, above the main body 10 of the automatic hitch is a bell-shaped body 20 which is crossed transversally by an actuating bar 21 and by a release bar 22, both of which rotate with respect to it and both terminating with respective control handles 23, 24, positioned on opposite sides of the bell-shaped body. A torsion spring 25 is wound around the actuating bar 21, its ends being fixed respectively to the bell-shaped body 20 and to the control handle 23 to hold the latter in the position illustrated in figure 4. Exterior to the bell-shaped body 20 and on the opposite side to the handle 23, a rotating actuating lever 26 is mounted on the bar 21, held axially on the bar by means of a transverse retaining pin 27. The ends of the retaining pin 27 protrude with respect to the bar 21 so as to come into contact, under certain working conditions better described below, with lateral extensions 28 of the lever 26. At the top of the bell-shaped body 20, as can be seen in figure 3, is a plate 29 which holds the end of a guiding sheath 30 containing a control cable 31 slidable therein, originating from a remote control, for example situated inside the driver's cab of a vehicle, and equipped with a cablehead 32 which hooks onto the lever 26.

Inside the bell-shaped body 20, the release bar 22 is fixed to the head 33a of a sensor lever 33 which has an appendix 34 extending downwards inside the fork-shaped opening 12, close to its lower wall 12c in which an opening 35 is cut, housing a helical spring 36 which presses against a predetermined portion of the appendix 34 in correspondence with a protrusion 37. A prong 38 extends from the head 33a of the lever 33 and, in the configuration shown in figure 1, rests against the head 40a of a control lever 40 fixed to the actuating bar 21. More specifically, one side 38a of the prong 38 is in contact with a lower arched wall 39 which terminates posteriorly with a tooth 41.

On the bar 22, alongside the sensor lever 33, is a rotating and sliding auxiliary lever 42 which, as can be seen more clearly in figures 2 and 4, has a secondary prong 43 with a side 43a basically the same as the side 38a and with a head wall 43b which protrudes radially more than the head wall 38b of the prong 38. The auxiliary lever 42 is subject to the action of an elastic part 44 which simultaneously pushes the prong 43 upwards and the entire lever 42 against the head 33a of the sensor lever 33. In the preferred form illustrated in the figures, but not for this reason limiting, the elastic part 44 is a helicoidal spring wound around the release bar 22. Two respective oblique teeth 45, 46 protrude from the facing sides of the head 33a and the lever 42, spaced one from the other by an angle such that, as will be shown more clearly below, in a configuration of the device in which the prongs 38, 43 are aligned, the oblique teeth come into contact so as to move the auxiliary lever 42 axially along the bar 22 away from the lever 33, contrasting the action of the spring 44.

At one end opposite to the head 40a, the lever 40 has a safety tooth 47 which extends laterally close to an upper end 13a of the pin 13, and is also articulated to a connecting rod 48 which terminates in a spherical head 49 held with a pre-determined axial clearance inside a cavity 50, cut axially in the upper portion of the pin 13, by means of two retaining rings 51, 52. The spherical connection between the head 49 of the connecting rod 48 and the pin 13 allows the latter to rotate freely around its axis A-A..

With reference to figure 2, a piston 53 slides in a transverse hole cut in one side of the bell-shaped body 20, and is held down by a spring 54 against one side of the lever 40 on which there is an oblique step 55. When the lever 40 is in the fully lowered position, the piston 53 is in the position illustrated with the continuous line in figure 2. When the lever 40 is raised, the oblique step 55 forces the piston 53 against the action of the spring 54, causing its partial exit from the bell-shaped body, as shown by the dashed line in figure 2. When the lever 40 is raised further, the piston is held in the partially protruding position by the side wall of the pin 13.

When the tow hitch is in the closed position, the pin 13 is lowered as shown in figure 1. On insertion of a towing eye in the tow hitch, the bar 21 is rotated by means of the handle 23 or the lever 26, contrasting the action of the spring 25, and the end of the lever 40 and the connecting rod 48 are raised to the position shown with the dashed line S in figure 1. The spherical head 49 of the connecting rod 48 interacts with the retaining rings 51, 52, vertically raising the pin 13 to the position in which its lower end 15 reaches the position 15a in figure 1. It should be noted that in the illustrated preferred embodiment of the device, the presence of the two retaining rings 51, 52 makes it possible to shift the action line of the force acting on the pin 13 further towards the centre of the sphere 49, so as to prevent the retaining rings from being forced between the wall of the inner cavity of the pin 13 and the surface of the spherical head 49. Similar systems can naturally be foreseen as alternatives to what is illustrated.

During the rotation of the lever 40, the arched wall 39 slides against the side 38a of the prong 38 until the tooth 41 passes the head 38b. At this point, the thrust caused by the spring 36 allows the appendix 34 to reach the position indicated with the broken line 34a in figure 1, thus engaging the tooth 41 with the head 38b of the prong 38. If the movement of the appendix 34 to position 34a is prevented, in particular by the presence of a towing eye already inserted in the hitch, the rotation of the inner lever 42 with respect to the sensor lever 33, caused by the reaction of the spring 44, disengages the teeth 45, 46 with the consequent movement of the lever 42 towards the sensor lever 33, again caused by the spring 44. In this way, the. head 43b of the prong 43 can block the tooth 41 instead of the prong 38. When the towing eye is removed from the hitch and the appendix 34 can move, the head 38b of the prong 38 replaces the head of the prong 43 in blocking the tooth 41 since the oblique teeth 45, 46 interact to move the lever 42, disengaging the prong 43 from the tooth 41. The fact that the head of the prong 38 is slightly lower radially with respect to the head of the prong 43 ensures a secure coupling of the tooth 41 when passing from the prong 43 to the prong 38.

The towing eye which is inserted in the opening of the open hitch pushes the appendix 34 towards the bottom 12c of the opening 12, forcing the release of the prong 38 from the tooth 41 and the lowering of the pin 13 as a result of the returning action of the spring 25. In the fully closed position, the spherical head 49 moves down inside the cavity 50 of the pin until it touches the bottom wall, reaching the position shown by the dashed line 49a in figure 1. When the head is in this position, the tooth 47 of the lever 40 acts as the first safety device by positioning itself immediately above the upper edge of the pin 13, as shown by the dashed line 47a, thus preventing the pin 13 from moving back upwards as a result of possible vertical thrusting by the towing eye.

A second safety device is achieved thanks to the piston 53 which has the dual purpose of visibly indicating that the perfect closing position has been reached by fully retracting inside the bell-shaped body 20 on closing, and protruding in the event of imperfect locking, thus preventing the pin 13 from accidentally moving back upwards by coming into contact with the upper edge of the pin 13, as does the tooth 47. The safety devices are automatically disengaged when the hitch is opened: the lever 40 lifts up and before the spherical head comes into contact with the retaining rings 51, 52, the tooth 47 releases the upper part of the pin 13 and the piston 53 is moved back by the oblique tooth 55.

The handle 24 connected to the bar 22 allows the tow hitch to be closed, by lowering the pin 13, even in the absence of the automatic action caused by a towing eye on the appendix 34. The particular configuration of the control lever 26 which interacts with the pin 27 in only one of the two rotation directions allows manual opening of the hitch by means of the handle 23 without this causing a corresponding rotation of the lever 26 which could otherwise cause bending or wear of the flexible cable 31. When, on the other hand, the hitch is opened by remote control by means of the cable 31, the rotation of the lever 26 causes the rotation of the bar 21 and consequently also of the handle 23.

It is particularly important to point out that the pin 13 remains free to rotate around its axis even when the hitch is closed, thus preventing torsion exerted by the towing eye inserted in the hitch from negatively affecting the structure of the control device enclosed within the bell-shaped body.

## Claims

1. Automatic tow hitch for vehicles, in particular agricultural vehicles, of the type comprising:
- a main body (10) including an opening (12) with two opposite lips (12a, 12b) between which the towing eye of a trailer is inserted when in use,
- a pin (13) which is axially mobile along a sliding direction which is transverse with respect to the lips of the opening (12) from a lowered closed position to a raised open position,
- a sensor organ (34) located at least partially inside the opening (12) of the tow hitch to detect the presence of a towing eye and to consequently control the movement of the pin (13) from the raised position to the lowered position,
- actuator means (21, 33, 38, 43, 48) to selectively control the movement of the pin (13) along the sliding direction, comprising an actuating lever (40) coupled to the pin (13), and primary blocking means (38) connected to the sensor organ (34) and co-operating with the actuating lever (40) to block the pin (13) in the raised position, **characterised by** the fact that the actuator means further comprise secondary blocking means (43) being mounted alongside the primary blocking means, said primary and secondary blocking means co-operating alternatively with the common actuating lever (40) to block the pin (13) in the raised position regardless of the presence of the towing eye detected by the sensor organ (34).

2. Automatic tow hitch according to claim 1, **characterised by** the fact that the pin (13) is connected to actuator means (48) with general freedom of rotation around its axis (A-A).

3. Automatic tow hitch according to claim 2, **characterised by** the fact that the actuator means comprise at least a connecting rod (48) with a spherical end (49) housed inside a cavity (50) provided in one end of the pin (13).

4. Automatic tow hitch according to claim 3, **characterised by** the fact that the spherical end (49) of the connecting rod is mounted inside the cavity (50) of the pin with pre-determined clearance along the sliding direction (A-A) of the pin.

5. Automatic tow hitch according to claim 4, **characterised by** the fact that the spherical end (49) of the connecting rod is free to move inside the cavity (50) from a first position corresponding to the engagement of the first (13a, 47) and second (53) safety means to a second position corresponding to the disengagement of the safety means.

6. Automatic tow hitch according to claim 1, **characterised by** the fact that the primary and secondary blocking means each comprise a prong (38, 43) with a head (38b, 43b) and a side (38a, 43a), the common actuating lever (40) comprising a pawl (41) which co-operates selectively with the prong heads of the primary and secondary blocking means to maintain the pin (13) in the raised position.

7. Automatic tow hitch according to claim 6, **characterised by** the fact that the common actuating lever (40) comprises a shaped wall (39) adjacent to the pawl (41), the sides (38a, 43a) of the prongs of the primary and secondary blocking means co-operating with the shaped wall (39) to cause the movement of the pin (13) to the raised position.

8. Automatic tow hitch according to claims 1, **characterised by** the fact that the primary (38) and secondary (43) blocking means are mounted reciprocally mobile and rotating with respect to a pre-determined axis, a relative rotation of the primary blocking means with respect to the secondary blocking means determining the respective axial separation or approach along the pre-determined axis.

9. Automatic tow hitch according to claim 1, **characterised by** the fact that the tow hitch comprises elastic compression means (44) to maintain the primary (38) and secondary blocking means (43) alongside one another.

10. Automatic tow hitch according to claim 9, **characterised by** the fact that the primary and secondary blocking means include respective complementary oblique teeth (45, 46) facing each other and interacting to separate the blocking means from each other in correspondence of at least one relative pre-determined rotation, in contrast with the action of the elastic compression means (44).

11. Automatic tow hitch according to claims 7 and 9, **characterised by** the fact that the elastic compression means (44) hold the side (43a) of the prong (43) of the secondary blocking means in contact with the shaped wall (39) of the common actuating lever (40).

12. Automatic tow hitch according to claim 11, **characterised by** the fact that the elastic compression means comprise a helicoidal spring (44) wound around the pre-determined rotation axis of the blocking means, this spring acting resiliently in compression along the direction of the axis and torsionally around this axis.

13. Automatic tow hitch according to claim 1, **characterised by** the fact that it comprises a control bar (21) to control the movement of the pin (13) from the lowered position to the raised position, the control bar (21) comprising a manual actuator organ (23) for close-up control and a lever actuator organ (26) for remote control.

14. Automatic tow hitch according to claim 13, **characterised by** the fact that it comprises decoupling means (27, 28) to prevent the movement of the actuator lever organ (26) following the activation of the manual actuator organ (23).

15. Automatic tow hitch according to claim 14, **characterised by** the fact that the decoupling means comprise a pin (27) mounted transversally on the control bar (21), the lever actuator organ (26) being mounted to rotate on the control bar (21) and comprising extensions (28) which interact with the pin (27), by relative rotations of a pre-determined excursion, in only one of the two rotation directions.

## Patentansprüche

1. Automatische Anhängervorrichtung für Fahrzeuge, insbesondere landwirtschaftliche Fahrzeuge, des Typs umfassend:
- einen Hauptkörper (10) mit einer Öffnung (12) mit zwei sich gegenüberliegenden Lippen (12a, 12b), zwischen denen die Anhängeröse eines Anhängers im Gebrauch eingeführt ist;
- einen Stift (13), der entlang einer in Bezug auf die Lippen der Öffnung (12) quer liegenden Schieberichtung von einer abgesenkten, geschlossenen Position in eine angehobene, offene Position axial beweglich ist,
- ein Sensorelement (34), das zumindest teilweise in der Öffnung (12) der Anhängervorrichtung angeordnet ist, zum Erkennen der Anwesenheit einer Anhängeröse und zur sich daraus ergebenden Steuerung der Bewegung des Stifts (13) von der angehobenen Position in die abgesenkte Position,
- Betätigungsmittel (21, 33, 38, 43, 48) zur wahlweisen Steuerung der Bewegung des Stifts (13) entlang der Schieberichtung, umfassend einen Betätigungshebel (40), der mit dem Stift (13) gekoppelt ist, und primäre mit dem Sensorelement (34) verbundene Blockiermittel (38), die mit dem Betätigungshebel (40) zum Blockieren des Stifts (13) in der angehobenen Position zusammenarbeiten,
**dadurch gekennzeichnet, dass** die Betätigungsmittel ferner sekundäre Blockiermittel (43) aufweisen, die neben den primären Blockiermitteln angebracht sind, wobei entweder die primären oder die sekundären Blockiermittel mit dem gemeinsamen Betätigungshebel (40) zum Blockieren des Stifts (13) in der angehobenen Position unabhängig von der vom Sensorelement (34) erkannten Anwesenheit der Anhängeröse zusammenwirken.

2. Automatische Anhängervorrichtung nach Anspruch 1,
**dadurch gekennzeichnet, dass** der Stift (13) mit Betätigungsmitteln (48) so verbunden ist, dass er sich um seine Achse (A-A) allgemein frei drehen kann.

3. Automatische Anhängervorrichtung nach Anspruch 2,
**dadurch gekennzeichnet, dass** die Betätigungsmittel zumindest eine Verbindungsstange (48) mit einem kugelförmigen Ende (49), das in einem in einem Ende des Stifts (13) angebrachten Hohlraum (50) untergebracht ist, aufweisen.

4. Automatische Anhängervorrichtung nach Anspruch 3,
**dadurch gekennzeichnet, dass** das kugelförmige Ende (49) der Verbindungsstange im Hohlraum (50) des Stifts mit einem vorbestimmten Abstand entlang der Schieberichtung (A-A) des Stifts angeordnet ist.

5. Automatische Anhängervorrichtung nach Anspruch 4,
**dadurch gekennzeichnet, dass** sich das kugelförmige Ende (49) der Verbindungsstange frei in den Hohlraum (50) aus einer ersten, dem Eingriff der ersten (13a, 47) und zweiten (53) Sicherheitsmittel entsprechenden Position in eine zweite, dem Lösen der Sicherheitsmittel entsprechenden Position bewegen lässt.

6. Automatische Anhängervorrichtung nach Anspruch 1,
**dadurch gekennzeichnet, dass** die primären und sekundären Blockiermittel jeweils eine Gabel (38, 43) mit einem Kopf (38b, 43b) und einer Seite (38a, 43a) umfassen, wobei der gemeinsame Betätigungshebel (40) eine Klinke (41) umfasst, die wahlweise mit den Gabelköpfen der primären und sekundären Blockiermittel zusammenarbeitet, um den Stift (13) in der angehobenen Position zu halten.

7. Automatische Anhängervorrichtung nach Anspruch 6,
**dadurch gekennzeichnet, dass** der gemeinsame Betätigungshebel (40) eine geformte Wand (39) neben der Klinke (41) umfasst, wobei die Seiten (38a, 43a) der Gabeln der primären und sekundären Blockiermittel mit der geformten Wand (39) zusammenarbeiten, um die Bewegung des Stifts (13) in die angehobene Position zu veranlassen.

8. Automatische Anhängervorrichtung nach Anspruch 1,
**dadurch gekennzeichnet, dass** die primären (38) und sekundären (43) Blockiermittel so angeordnet sind, dass sie sich hin und her bewegen lassen und bezüglich einer vorbestimmten Achse drehbar sind, wobei eine relative Drehung der primären Blockiermittel bezüglich der sekundären Blockiermittel die jeweilige axiale Trennung oder Annäherung entlang der vorbestimmten Achse bestimmt.

9. Automatische Anhängervorrichtung nach Anspruch 1,
**dadurch gekennzeichnet, dass** die Anhängervorrichtung elastische Kompressionsmittel (44) zum Nebeneinanderhalten der primären (38) und sekundären Blockiermittel (43) umfasst.

10. Automatische Anhängervorrichtung nach Anspruch 9,
**dadurch gekennzeichnet, dass** die primären und sekundären Blockiermittel jeweils komplementäre schräge Zähne (45, 46) aufweisen, die jeweils zueinander weisen und zusammenwirken, um die Blockiermittel entsprechend zumindest einer vorbestimmten Relativdrehung voneinander zu trennen, entgegen der Wirkung der elastischen Kompressionsmittel (44).

11. Automatische Anhängervorrichtung nach Ansprüchen 7 und 9, **dadurch gekennzeichnet, dass** die elastischen Kompressionsmittel (44) die Seite (43a) der Gabel (43) der sekundären Blockiermittel in Kontakt mit der geformten Wand (39) des gemeinsamen Betätigungshebels (40) hält.

12. Automatische Anhängervorrichtung nach Anspruch 11,
**dadurch gekennzeichnet, dass** die elastischen Kompressionsmittel eine spiralförmige Feder (44) umfassen, die um die vorbestimmte Drehachse der Blockiermittel gewickelt ist, wobei diese Feder entlang der Achsenrichtung nachgiebig zusammendrückbar ist und um die Achse verdrehbar ist.

13. Automatische Anhängervorrichtung nach Anspruch 1,
**dadurch gekennzeichnet, dass** sie eine Steuerstange (21) zur Steuerung der Bewegung des Stifts (13) von der gesenkten Position in die angehobene Position umfasst, wobei die Steuerstange (21) ein manuelles Betätigungselement (23) zur nahen Steuerung und ein Hebelbetätigungselement (26) zur Fernsteuerung umfasst.

14. Automatische Anhängervorrichtung nach Anspruch 13,
**dadurch gekennzeichnet, dass** sie Entkopplungsmittel (27, 28) zur Verhinderung der Bewegung des Hebelbetätigungselements (26) durch die Aktivierung des manuellen Betätigungselements (23) umfasst.

15. Automatische Anhängervorrichtung nach Anspruch 14,
**dadurch gekennzeichnet, dass** die Entkopplungsmittel einen quer auf der Steuerstange (21) befestigten Stift (27) umfassen, wobei das Hebelbetätigungselement (26) so angeordnet ist, dass es sich auf der Steuerstange (21) drehen kann und Verlängerungen (28) umfasst, die mit dem Stift (27) über relative Drehungen in einem vorbestimmten Ausmaß in nur einer der zwei Drehrichtungen zusammenarbeiten.

## Revendications

1. Attelage automatique pour véhicules, en particulier pour véhicules agricoles, du type comprenant :
- un corps principal (10) incluant une ouverture ayant deux lèvres opposées (12a,12b) entre lesquelles l'oeil d'attelage d'une remorque est inséré en utilisation ;
- une tige (13), mobile axialement dans la direction de coulissement transversale par rapport aux lèvres de l'ouverture (12), d'une position fermée et abaissée à une position ouverte et levée ;
- un organe formant capteur (34), placé au moins partiellement à l'intérieur de la ouverture (12) de l'attelage, afin de détecter la présence d'un oeil d'attelage et, en conséquence, de commander le déplacement de la tige (13) de la position levée à la position abaissée ;
- des moyens actionneurs (21, 33, 38, 43, 48), afin de commander sélectivement le déplacement de la tige (13) dans la direction de coulissement, comprenant un levier d'actionnement (40) couplé a la tige (13) et des moyens de blocage primaires (38) reliés à l'organe formant capteur (34) et coopérant avec le levier d'actionnement (40) pour bloquer la tige (13) à la position levée, **caractérisé par le fait que** les moyens d'actionnement comprennent en outre des moyens de blocage secondaires (43) montés dans les moyens de blocage primaires, lesdits moyens de blocage primaires et secondaires coopérant de façon alternative avec le levier d'actionnement (40) commun, afin de bloquer la tige (13) à la position levée, indépendamment de la présence de l'oeil d'attelage, détectée par l'organe formant capteur (34).

2. Attelage automatique selon la revendication **caractérisé par le fait que** la tige (13) est reliée à des moyens d'actionnement (48), ayant une liberté de rotation globale autour de leur axe (A-A)

3. Attelage automatique selon la revendication 2, **caractérisé par le fait que** les moyens d'actionnement comprennent au moins une bielle (48) à extrémité sphérique (49), logée a l'intérieur d'une cavité (50) ménagée dans une extrémité de la tige (13).

4. Attelage automatique selon la revendication 3, **caractérisé par le fait que** l'extrémité sphérique (49) de la bielle est montée à l'intérieur de la cavité (50) de la tige avec un leu pré-déterminé dans la direction de coulissement (A-A) de la tige.

5. Attelage automatique selon la revendication 4, **caractérisé par le fait que** l'extrémité sphérique (49) de la bielle est libre de se déplacer à l'intérieur de la cavité (50), d'une position, correspondant à la mise en prise des premiers (13a,47) et deuxièmes (53) moyens de sécurité, à une deuxième position, correspondant à la mise hors de prise des moyens de sécurité.

6. Attelage automatique selon la revendication 1, **caractérisé par le fait que** les moyens de blocage primaires et secondaires comprennent chacun une dent (38,43) ayant une tête (38b,43b), et un côté (38a,43a), le levier d'actionnement commun (40) comprenant un cliquet (41), coopérant de façon sélective avec les têtes de dent des moyens de blocage primaires et secondaires, afin de maintenir la tige (13) à la position levée.

7. Attelage automatique selon la revendication 6, **caractérisé par le fait que** le levier d'actionnement commun (40) comprend une paroi profilée (39), adjacente au cliquet (41), les côtés (38a,43a) des dents des moyens de blocage primaires et secondaires coopérant avec la paroi profilée (39) pour provoquer le déplacement de la tige (13) à la position levée.

8. Attelage automatique comprenant selon la revendication 1, **caractérisé par le fait que** les moyens de blocage primaires (38) et secondaires (43) sont montés avec une mobilité linéaire dans un sens et dans l'autre et en rotation par rapport à un axe pré-déterminé, une rotation relative des moyens de blocage primaires par rapport aux moyens de blocage secondaires déterminant la séparation ou l'approche axiale respective dans la direction de l'axe pré-déterminé.

9. Attelage automatique selon la revendication 1, **caractérisé par le fait que** l'attelage comprend des moyens de compression élastique (44) pour maintenir les moyens de blocage primaires (38) et secondaires (43) l'un près de l'autre.

10. Attelage automatique selon la revendication 9, **caractérisé par le fait que** les moyens de blocage primaires et secondaires comprennent des dents obliques (45,46) respectives complémentaires, tournées l'une vers l'autre, interagissant pour séparer les moyens de blocage les uns des autres en correspondance d'au moins une rotation pré-déterminée relative, à la différence de l'action exercée par les moyens de compression élastique (44).

11. Attelage automatique selon les revendications 7 et 9, **caractérisé par le fait que** les moyens de compression élastiques (44) maintiennent le côté (43a) de la dent (43) des moyens de blocage secondaires en contact avec la paroi profilée (39) du levier d'actionnement commun (40).

12. Attelage automatique selon la revendication 11, **caractérisé par le fait que** les moyens de compression élastiques comprennent un ressort hélicoïdal (44) enroulé autour de l'axe de rotation pré-déterminé des moyens de blocage, ce ressort agissant de façon élastique en compression dans la direction de l'axe et en torsion autour de cet axe.

13. Attelage automatique selon la revendication 1, **caractérisé par le fait qu'**il comprend une barre de commande (21) pour commander le déplacement de la tige (13) de la position abaissée à la position levée, la barre de commande (21) comprenant un organe d'actionnement manuel (23), pour assurer une commande rapprochée, et un organe actionneur de levier (26), pour assurer une commande à distance.

14. Attelage automatique selon la revendication 13, **caractérisé par le fait qu'**il comprend des moyens de découplage (27,28) pour empêcher le déplacement de l'organe de levier d'actionnement (26) à la suite de l'activation de l'organe d'actionnement manuel (23).

15. Attelage automatique selon la revendication 14, **caractérisé par le fait que** les moyens de découplages comprennent une tige (27), montée transversalement sur la barre de commande (21), l'organe d'actionnement de levier (26) étant monté pour tourner sur la barre de commande (21) et comprenant des extensions (28) interagissant avec la tige (27) par l'effet des rotations relatives d'une excursion pré-déterminé, dans un seul des sens de rotation.
